# FASCICULE DE BREVET EUROPEEN

(11) **EP 2 456 996 B1**
(45) Date de publication et mention de la délivrance du brevet: **07.08.2019**
(21) Numéro de dépôt: 10725616.6
(22) Date de dépôt: 15.06.2010
(51) Int. Cl.: F16F 1/38

(54) **DOUILLE POUR UNE ARTICULATION ELASTIQUE**
BUCHSE FÜR EINE ELASTISCHE VERBINDUNG
BUSH FOR A RESILIENT JOINT

(30) Priorité: 24.07.2009 FR 0955217
(43) Date de publication de la demande: 30.05.2012
(73) Titulaire: Anvis SD France SAS, 58302 Decize Cedex (FR)
(72) Inventeur: NECTOUX, Thierry, 58300 St. Léger des Vignes (FR); SENNEPIN, Sébastien, 58390 Dornes (FR); SKIERA, Jean-François, 58340 Cercy la Tour (FR)
(74) Mandataire: Schmid, Nils T.F.
(86) Numéro de dépôt international: PCT/EP2010/003574
(87) Numéro de publication internationale: WO 2011/009512

(56) Documents cités:
- WO-A1-02/070170
- JP-A- 61 248 930
- US-A1- 2005 025 894
- US-A1- 2007 140 785

## Description

La présente invention concerne une douille pour une articulation élastique destinée à assembler élastiquement deux pièces de structure d'un véhicule, la douille ayant à au moins une de ses deux extrémités axiales une face radiale d'appui définissant un plan de référence radial et un moyen d'augmentation de la friction entre la face d'appui et une des deux pièces de structure, le moyen d'augmentation de friction étant formé par plusieurs creux et élévations à la face radiale d'appui.

En outre la présente invention concerne un procédé de traitement d'une douille pour une articulation destinée à assembler deux pièces de structure d'un véhicule, la douille ayant à au moins une de ses deux extrémités axiales une face radiale d'appui définissant un plan de référence radial, dans ledit procédé ladite extrémité étant déformée par un bouterollage.

Ce type d'articulation a deux fonctions principales. D'un côté il sert à connecter une pièce à une autre pièce et d'un autre côté à atténuer la transmission de vibrations entre l'une et l'autre de ces pièces.

Dans le domaine de la construction des véhicules automobiles, ce type d'articulation est par exemple utilisé pour l'assemblage et l'amortissement des organes de liaison au sol, comme les essieux ou les triangles de suspension des trains de roues par rapport au châssis du véhicule.

EP 0 524 844 A1 divulgue un procédé de formage de l'une des extrémités d'une douille interne rigide d'une articulation élastique à bagues coaxiales après moulage. Une surépaisseur annulaire est formée par un bouterollage. L'une des faces planes à une extrémité de ladite douille interne rigide comporte au moins un élément saillant tel qu'une nervure cylindrique ou des cannelures radiales.

US 2007/0140785 A1 divulgue un procédé pour relier par friction des surfaces frontales des deux éléments de la machine pour la transmission de couples élevés ou des forces transversales, dans lequel des élévations sont prévues sur l'une des surfaces à relier, qui sont plus dures que la matière de l'autre surface.

JP 61-248930 divulgue une douille pour une articulation, dans lequel uns face d'appui radiale comprend des élévations et des creux.

WO 02/070170 A1 divulgue un procédé de bouterollage d'une douille dans lequel on soumet une extrémité de la douille à un bouterollage pour former sur un chant d'extrémité de cette douille des dents en relief ainsi que des cavités.

Dans ces procédés connus de formage d'une douille pour une articulation, la formation des cannelures ou des nervures pour augmenter la friction dans la face plane est grossière. La douille connue a une face radiale d'appui comprenant un plan de référence radial. Un plan radial comprenant la partie ou surface maximale de la face radiale d'appui définit le plan de référence radial. Le coefficient de frottement sur la face plane doit être important pour empêcher un dérapage radial d'une pièce fixée à la douille. Donc, les cannelures ou les nervures d'une taille importante sont formées lors d'un bouterollage qui ajuste en même temps la longueur de la douille. Or, la précision d'une longueur axiale d'une douille et du coefficient de frottement de la face radiale d'appui varie d'une articulation à l'autre articulation fabriquée. Il existe donc un conflit d'intérêt de fournir sur un côté un coefficient de frottement élevé et sur un autre côté une longueur axiale précise. Néanmoins, les constructeurs automobiles demandent aujourd'hui des articulations avec une précision élevée.

L'objectif de l'invention est de mettre à disposition une douille pour une articulation et un procédé de traitement d'une douille pour une articulation qui surmonte les inconvénients des douilles connues, en particulier une douille qui dispose sur un côté une longueur précise en direction axiale et sur un autre côté empêche un dérapage radial d'une pièce fixée à la douille.

Pour cela, l'invention fournit une douille pour une articulation du type susmentionné, les creux et les élévations étant formés par un faisceau laser, les creux ayant une profondeur axiale maximale inférieure à 1mm, en particulier inférieure à 0.5 mm, et les élévations ayant une hauteur axiale maximale inférieure à 1mm, en particulier inférieure à 0.5 mm, respectivement par rapport au plan de référence radial.

Avec la séparation de la formation d'une longueur précise de la douille, en particulier une douille métallique, lors d'un bouterollage et la formation des creux et des élévations avec un faisceau laser dans une phase de production ultérieure un coefficient de frottement précis entre la douille et une pièce à monter sur la douille, et une articulation ayant des dimensions et comportements précis peuvent être achevé. Typiquement, le procédé de bouterollage est utilisé pour agrandir la face radiale d'appui.

Des directions radiales et circonférentielle sont définies par rapport à l'axe longitudinal de la douille qui est, dans un mode de réalisation, l'axe de symétrie de révolution de la douille. L'axe longitudinal correspond typiquement à la direction axiale de la douille.

Un plan radial comprenant la partie maximale de la face axiale d'appui définit le plan de référence radial, en particulier situé en direction axial approximativement au milieu entre les dimensions axiales maximales des creux et des élévations.

Dans un mode de réalisation, les creux ont une profondeur axiale maximale entre 0.1 et 0.5 mm et/ou les élévations ont une hauteur axiale maximale entre et 0.1 et 0.5 mm respectivement par rapport au plan de référence radial. Par exemple, les élévations et les creux ont une hauteur ou profondeur d'environ 0.2 mm.

Par exemple, les élévations et les creux ont des valeurs de hauteur ou de profondeur sensiblement égales par rapport au plan de référence radial.

Dans un mode de réalisation, une pluralité des creux, en particulier sensiblement tous les creux, est/sont allongés, en particulier en forme d'un sillon, et s'étend(ent) avec une profondeur axiale sensiblement constante dans la face radiale d'appui. Par exemple, un creux a à chaque endroit sensiblement la même profondeur axiale, en particulier dans un profil transversal du creux.

Par exemple, dans un mode de réalisation, les creux ont une largeur d'environ 0.1 mm à 0.5 mm dans le plan de référence radial. La largeur d'un sillon ou d'un creux est la dimension transversale à l'étendue longitudinale du sillon ou creux, par exemple la direction transversale à la direction de formation du sillon ou creux par le faisceau laser. Par exemple, en cas d'un sillon ou creux circulaire, la largeur est la dimension radiale du sillon ou creux dans le plan de référence radial. Dans un autre exemple, en cas d'un sillon ou creux rectiligne s'étendant radialement et étant disposé sur une droite croisant l'axe longitudinal, la largeur est la dimension circonférentielle du sillon ou creux dans le plan de référence radial.

Dans un mode de réalisation, les élévations sont disposées parallèlement aux creux.

Par exemple, dans un mode de réalisation, deux élévations sont associées à chaque creux.

Dans un mode de réalisation, une élévation est disposée entre un creux et une partie non déformée de la face radiale d'appui, et les élévations et les creux sont contigus. La partie non déformée se situe dans le plan de référence radial.

Par exemple, dans un mode de réalisation, les élévations sont formées par du matériau déformé lors de la formation des creux avec le faisceau laser.

Dans un mode de réalisation, la surface a un coefficient de frottement supérieur à environ 0.3 et, en particulier inférieur à environ 0.95.

Par exemple, dans un mode de réalisation, le rapport entre la surface de la face radiale d'appui déformée par le faisceau laser et la surface de la face radiale d'appui non-déformée par le faisceau laser respectivement dans le plan de référence radial est supérieure à 1/3, en particulier entre 1/3 et 1, de préférence autour de 1/2. La surface déformée par le faisceau laser comprend la surface du plan de référence radial couvert par les élévations et les creux, et la surface non-déformée par le faisceau laser comprend typiquement la surface de la face radiale d'appui restante.

Dans un mode de réalisation, une pluralité des creux, en particulier plus de la moitié des creux, de préférence tous les creux, s'étend(ent) dans une direction radiale, en particulier en forme d'étoile ayant son centre à l'axe longitudinal de la douille.

Dans un autre mode de réalisation, au moins un creux s'étend sensiblement spiroïdalement, en particulier ayant son centre à l'axe longitudinal de la douille.

Par exemple, dans un mode de réalisation, une pluralité des creux, en particulier plus de la moitié des creux, de préférence sensiblement tous les creux, est/sont sensiblement circulaire(s), chaque creux sensiblement circulaire ayant en particulier un diamètre différent. Les creux sensiblement circulaires sont par exemple des cercles ou ovales presque ou complètement fermés.

Dans un mode de réalisation, une pluralité des creux sensiblement circulaires, en particulier plus de la moitié des creux sensiblement circulaires, de préférence sensiblement tous les creux sensiblement circulaires, est/sont concentrique(s), en particulier autour d'un axe longitudinal de la douille, ou une pluralité des creux sensiblement circulaires, en particulier plus de la moitié des creux sensiblement circulaires, de préférence sensiblement tous les creux sensiblement circulaires, a/ont respectivement un centre différent, et la pluralité des creux sensiblement circulaires ne se croisent respectivement pas.

Dans un mode de réalisation, une pluralité des creux, en particulier plus de la moitié des creux, de préférence sensiblement tous les creux, est/sont sensiblement rectiligne(s), en particulier une première pluralité des creux sensiblement rectilignes parallèles croise sous un angle une seconde pluralité des creux sensiblement rectilignes parallèles, en particulier l'angle étant entre 70 degrés et 110 degrés. Typiquement, les creux rectilignes parallèles ont une distance régulière entre eux pour former une grille régulière.

Dans un mode de réalisation, une pluralité de creux, en particulier plus de la moitié des creux, de préférence sensiblement tous les creux, a/ont une forme de lignes brisées ouvertes ou fermées sur la face radiale d'appui.

Dans un mode de réalisation, une pluralité des creux, en particulier plus de la moitié des creux, de préférence sensiblement tous les creux, a/ont une forme serpentine ou aléatoire sur la face radiale d'appui.

Dans un mode de réalisation, une pluralité des creux, en particulier plus de la moitié des creux, de préférence sensiblement tous les creux, représentent un marquage ou une écriture sur la face radiale d'appui.

Dans un mode de réalisation, ladite extrémité étant déformée par un procédé de bouterollage, en particulier ladite extrémité ayant un bourrelet.

En outre l'invention concerne une articulation élastique pour assembler deux pièces de structure d'un véhicule et pour amortir des vibrations transmises entre l'une et l'autre pièce de structure ; ladite articulation ayant chacune un axe longitudinal et comportant une douille externe, une douille interne, et un ensemble de ressort élastique ou hydro-élastique étant disposé entre les deux douilles interne et externe, une des douilles interne ou externe étant formée selon l'une des variantes précédentes.

Par exemple, dans un mode de réalisation, les douilles interne et externe sont sensiblement concentriques dans l'état détendu de l'articulation.

Dans un mode de réalisation, une des deux pièces de structure d'un véhicule est susceptible d'être serré, par exemple par un vissage ou un rivetage, contre la face d'appui.

L'invention fournit en outre un procédé de traitement d'une douille pour une articulation destinée à assembler deux pièces de structure d'un véhicule, la douille ayant à au moins une de ses deux extrémités axiales une face radiale d'appui définissant un plan de référence radial, dans ledit procédé: ladite extrémité est déformée par un bouterollage ; et la face radiale d'appui de l'extrémité déformée est traitée par un faisceau laser afin de former des creux avec une profondeur axiale maximale inférieure à 1mm, en particulier inférieure à 0.5 mm, et des élévations avec une hauteur axiale maximale inférieure à 1mm, en particulier inférieure à 0.5 mm, respectivement par rapport au plan de référence radial.

Dans un mode de réalisation, un bourrelet est formé par le bouterollage, en particulier pour agrandir la face radiale d'appui.

Typiquement, les creux sont formés avec une profondeur axiale maximale supérieure à 0.1 et/ou les élévations sont formées avec une hauteur axiale maximale supérieure à 0.1 respectivement par rapport au plan de référence radial.

Dans un mode de réalisation, les élévations sont disposées de chaque côté des creux, et en particulier formées par de la matière déformé lors de la formation des creux par le faisceau laser.

Dans un mode de réalisation, le procédé selon l'invention est utilisé pour former une douille selon l'invention.

La description suivante permet d'apporter un certain nombre de précisions ou variantes aux principales caractéristiques expliquées ci-dessus, et de montrer quelques exemples de dispositifs répondant à la présente invention.
La figure 1 est une section longitudinale d'une articulation ;
la figure 2 est un profil d'une face d'appui d'une douille ;
la figure 3 est une vue en perspective d'une face d'appui selon un mode de réalisation ;
la figure 4 est une vue en face d'une face d'appui selon un autre mode de réalisation ;
la figure 5 est un motif de sillons sur une face d'appui d'une douille selon un mode de réalisation ;
la figure 6 est un motif de sillons sur une face d'appui d'une douille selon un autre mode de réalisation ; et
la figure 7 est un motif de sillons sur une face d'appui d'une douille selon un autre mode de réalisation.

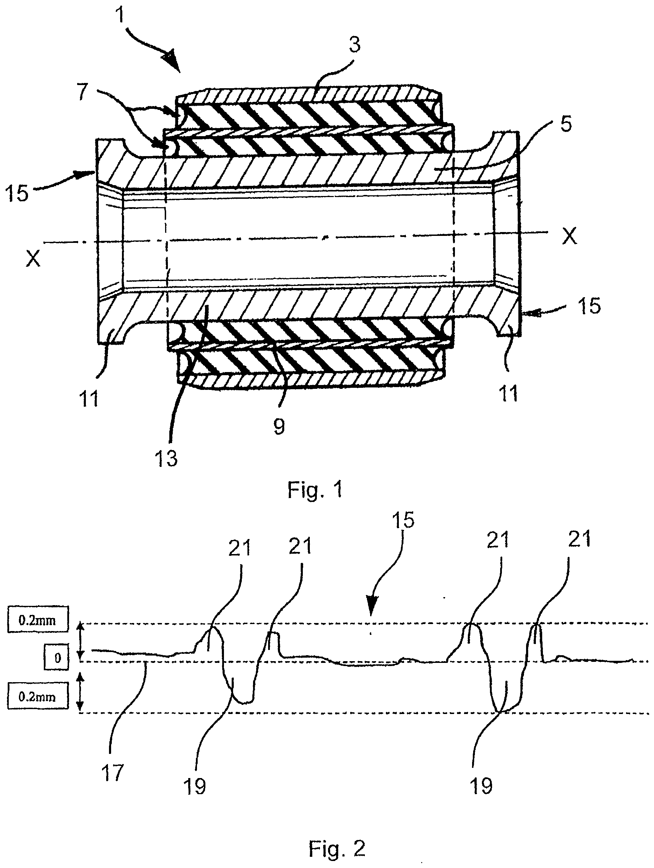

La figure 1 montre dans une section en direction axiale X une articulation 1. L'articulation a une forme sensiblement cylindrique et possède une douille externe 3 et une douille interne 5, toutes les deux sensiblement cylindrique et coaxiales de l'axe longitudinal X dans un état détendu de l'articulation. Ces douilles sont rigides et faites par exemple en métal. Un corps élastique 7 est fermement lié, au cours d'une vulcanisation en moule fermé sous pression et température contrôlées, aux douilles interne et externe rigides.

Facultativement, une armature intermédiaire 9, par exemple un tube d'un matériau rigide, par exemple un métal, peut augmenter la rigidité radiale de l'articulation 1.

Afin d'augmenter la surface d'appui sur les faces radiales d'appui à chaque extrémité, la douille interne 5 rigide présente deux surépaisseurs annulaires 11 par rapport à une partie centrale 13 de la douille interne 5. Les surépaisseurs peuvent être en forme de bourrelet.

Le procédé de formage par bouterollage permet de donner aux surépaisseurs annulaires un diamètre extérieur supérieur à celui de l'armature intermédiaire. A cet effet une machine qui comporte une bouterolle de révolution est montée tournant librement autour d'un axe oblique. La section droite de l'outil est conçue de façon à venir tangenter, ponctuellement, la face plane brute découpée sur le bout de la douille interne 5. La ligne d'appui radiale entre la bouterolle et la face plane brute découpée qui en résulte se déplace dans le plan contenant l'axe oblique lorsqu'il tourne autour de l'axe vertical de la machine, la bouterolle, libre en rotation, roule donc sans glisser sur sa face d'appui tangent.

Avec le procédé de bouterollage une face radiale d'appui plane 15 est formée sur les extrémités de la douille interne 5 de l'articulation 1. La face radiale d'appui a un plan de référence radial qui est sensiblement orthogonal à la direction axiale X de l'articulation ou de la douille interne 5. La longueur axiale de la douille interne 5 peut être précisément fabriquée par le procédé de bouterollage.

Ensuite, la face d'appui 15 doit être traitée pour obtenir un coefficient de frottement précis entre une pièce de structure d'un véhicule susceptible d'être fixé à la douille et la face d'appui 15. Par exemple l'articulation 1 peut connecter une suspension de roue à un châssis de voiture ou un bras oscillant.

Figure 2 montre un profil d'une partie de la face d'appui 15 traitée avec un faisceau laser pour agrandir le coefficient de frottement. La face d'appui 15 a un plan de référence radial 17. Dans la face d'appui 15 des sillons 19 et des élévations 21 sont formés avec le faisceau laser. Les élévations sont formées par le refoulement de matière pendant la création des sillons 19. Donc, avec le traitement au faisceau laser la face d'appui est déformée et le matériau de sillons n'est pas évaporé.

Dans un mode de réalisation, une profondeur des sillons par rapport au plan de référence radial est entre 0.1mm et 0.5mm, en particulier autour de 0.2mm. Typiquement, la profondeur est sensiblement constante tout le long des sillons. Les élévations ont une hauteur par rapport au plan de référence radial entre 0.1mm et 0.5mm, en particulier autour de 0.2mm. Les sillons ont une largeur dans le plan de référence radial entre 0.1mm et 0.5 mm, en particulier autour de 0.15mm.

Avec le procédé le coefficient de frottement entre deux surfaces métalliques planes et mutuellement en contact, par conséquent le coefficient de frottement entre la face d'appui d'une douille pour une articulation et une pièce d'un véhicule, plaquées entre elles par une fixation, comme par exemple un élément de vissage, est amélioré. L'assemblage entre l'articulation et la pièce reste démontable et résiste à des efforts orientés de façon normale à un axe de serrage qui correspond sensiblement à l'axe longitudinal de l'armature. Par exemple le coefficient de frottement µ est supérieur à 0.3 et peut aller jusqu'à 0.95 sans déplacement relatif entre la face d'appui et la pièce.

Non seulement la face d'appui d'une douille d'une articulation peut être traitée par un faisceau laser mais aussi les faces d'appui des pièces à connecter à ladite face d'appui de la douille peuvent être traitées similairement, par exemple des entretoises, de face de bout de tube dans l'assemblage d'éléments de châssis d'une automobile.

De plus, le traitement avec un faisceau laser a l'avantage d'être rapide et flexible.

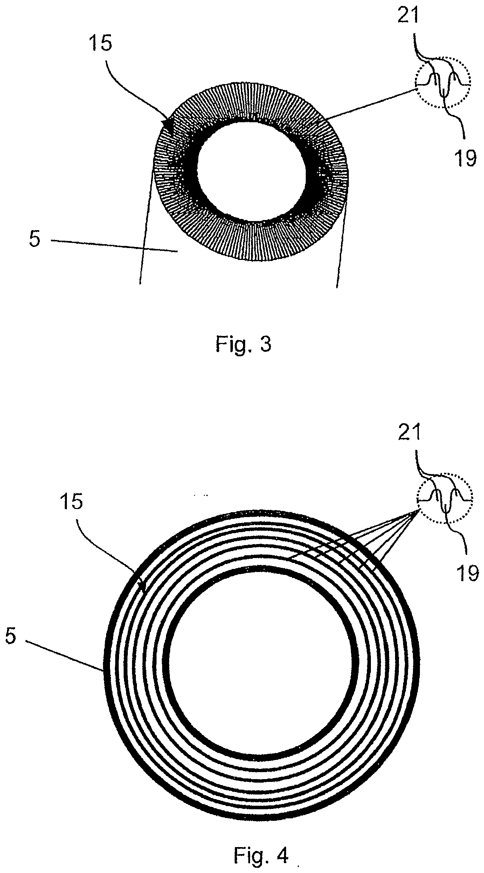

Les figures 3 à 7 montrent des différents motifs qui peuvent être réalisés avec le faisceau laser.

La figure 3 montre des sillons en forme d'étoile sur la face d'appui 15 de la douille 5. Les sillons s'étendent dans une direction radiale tout le long de la face d'appui de la douille. L'étoile et la douille sont typiquement concentriques. Le profil d'un sillon de l'étoile est agrandit dans un cercle pointillé à coté de la douille dans la figure 3. A côté du sillon 19 deux élévations 21 sont arrangées.

La figure 4 montre cinq sillons formés en cercles concentriques, chaque cercle ayant un diamètre différent aux autres cercles. Les cinq cercles recouvrent sensiblement toute la face d'appui de la douille. Le profil transversal d'un sillon d'un cercle est agrandit dans un cercle pointillé à coté de la douille dans la figure 4. A côté du sillon 19 deux élévations 21 sont arrangées qui suivent le sillon de chaque côté et sont aussi sensiblement circulaires.

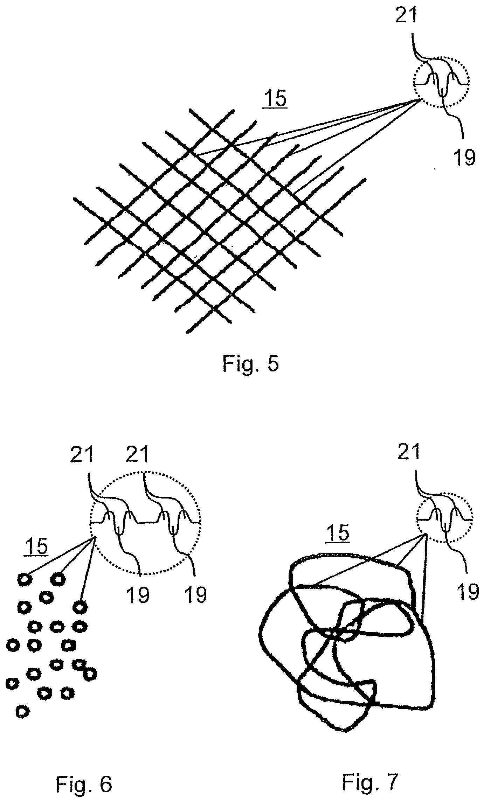

La figure 5 montre des sillons formés d'une manière quadrillée. Une première pluralité de six sillons rectilignes parallèles régulièrement espacés entre eux croise une deuxième pluralité de sept sillons rectilignes parallèles régulièrement espacés entre eux avec un angle d'environ 90 degrés. Le profil transversal de chaque sillon de la première et la deuxième pluralité est agrandit dans un cercle pointillé à coté dans la figure 5. A côté du sillon 19 deux élévations 21 sont arrangées.

La figure 6 montre des sillons formés en petits cercles qui sont arrangés l'un à côté de l'autre d'une manière aléatoire. Donc, les cercles ne se croisent pas. Les cercles ont un diamètre sensiblement plus petit qu'une largeur radiale de la bordure de l'extrémité où la face d'appui est arrangée. Le profil diamétral d'un petit cercle est agrandit dans un cercle pointillé à coté dans la figure 6. A côté du sillon circulaire 19 deux élévations circulaires 21 sont arrangées.

La figure 7 montre un sillon formé de manière aléatoire, par exemple un sillon serpentin. Le profil transversal d'un sillon est agrandit dans un cercle pointillé à coté dans la figure 7. A côté du sillon 19 deux élévations 21 sont arrangées qui suivent le sillon.

Les motifs montrés dans les figures 3 à 7 peuvent couvrir complètement la face d'appui d'une douille et peuvent être arbitrairement combinés. Il est important que le coefficient de frottement ou le coefficient d'adhésion entre la face d'appui de la douille et d'une pièce de véhicule soient élevés, pour éviter un dérapage radial causé par un effort en direction radiale. Le coefficient de frottement est fortement influencé par la combinaison des élévations avec des sillons sur la face d'appui.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

### Liste de signes de référence

- 1: articulation
- 3: douille externe
- 5: douille interne
- 7: corps élastique
- 9: armature intermédiaire
- 11: surépaisseurs annulaires
- 13: partie centrale
- 15: face d'appui
- 17: plan de référence radial
- 19: sillon
- 21: élévation
- X: axe longitudinal

## Revendications

1. Douille (5) pour une articulation élastique (1) destinée à assembler élastiquement deux pièces de structure d'un véhicule, la douille ayant à au moins une de ses deux extrémités axiales (11) une face radiale d'appui (15) définissant un plan de référence radial (17) et un moyen d'augmentation de la friction (19, 21) entre la face d'appui et une des deux pièces de structure, le moyen d'augmentation de la friction étant formé par plusieurs creux (19) et élévations (21) à la face radiale d'appui, dans lequel les creux (19) et les élévations (21) sont formés par un faisceau laser, les creux ayant une profondeur axiale maximale inférieure à 1mm, en particulier inférieure à 0.5 mm, et les élévations (21) ont une hauteur axiale maximale inférieure à 1mm, en particulier inférieure à 0.5 mm, respectivement par rapport au plan de référence radial, dans lequel une élévation est disposée entre un creux et une partie non déformée de la face radiale d'appui, la partie non déformée se situant dans le plan de référence radial, et que les élévations et les creux étant contigus et que deux élévations sont associées à chaque creux et que les élévations sont formées par la matière déformée lors de la formation des creux avec le faisceau laser, **caractérisée en ce que** les élévations et les creux ont des valeurs de hauteur ou de profondeur sensiblement égales par rapport au plan de référence radial.

2. Douille selon la revendication 1, **caractérisée en ce que** les creux ont une profondeur axiale maximale entre 0.1 et 0.5 mm et/ou les élévations ont une hauteur axiale maximale entre et 0.1 et 0.5 mm respectivement par rapport au plan de référence radial.

3. Douille selon la revendication 1 ou 2, **caractérisée en ce qu'**une pluralité des creux, en particulier sensiblement tous les creux, est/sont allongés, en particulier en forme d'un sillon, et s'étend(ent) avec une profondeur axiale sensiblement constante dans la face radiale d'appui.

4. Douille selon l'une des revendications précédentes, **caractérisée en ce que** les creux ont une largeur d'environ 0.1 mm à 0.5 mm dans le plan de référence radial.

5. Douille selon l'une des revendications précédentes, **caractérisée en ce que** les élévations sont disposées parallèlement aux creux.

6. Douille selon l'une des revendications précédentes, **caractérisée en ce que** la surface a un coefficient de frottement supérieur à environ 0.3 et, en particulier inférieur à environ 0.95.

7. Douille selon l'une des revendications précédentes, **caractérisée en ce que** le rapport entre la surface de la face radiale d'appui déformée par le faisceau laser et la surface de la face radiale d'appui non-déformée par le faisceau laser respectivement dans le plan de référence radial est supérieure à 1/3, en particulier entre 1/3 et 1, de préférence autour de 1/2, et/ou qu'une pluralité des creux, en particulier plus de la moitié des creux, de préférence tous les creux, s'étend(ent) dans une direction radiale, en particulier en forme d'étoile ayant son centre à l'axe longitudinal de la douille.

8. Douille selon l'une des revendications précédentes, **caractérisée en ce qu'**au moins un creux s'étend sensiblement spiroïdalement, en particulier ayant son centre à l'axe longitudinal de la douille.

9. Douille selon l'une des revendications précédentes, **caractérisée en ce qu'**une pluralité des creux, en particulier plus de la moitié des creux, de préférence sensiblement tous les creux, est/sont sensiblement circulaire(s), chaque creux sensiblement circulaire ayant en particulier un diamètre différent, cependant particulièrement une pluralité des creux sensiblement circulaires, en particulier plus de la moitié des creux sensiblement circulaires, de préférence sensiblement tous les creux sensiblement circulaires, est/sont concentrique(s), en particulier autour d'un axe longitudinal de la douille, ou une pluralité des creux sensiblement circulaires, en particulier plus de la moitié des creux sensiblement circulaires, de préférence sensiblement tous les creux sensiblement circulaires, a/ont respectivement un centre différent.

10. Douille selon l'une des revendications précédentes, **caractérisée en ce que** une pluralité des creux, en particulier plus de la moitié des creux, de préférence sensiblement tous les creux, est/sont sensiblement rectiligne(s), en particulier une première pluralité des creux sensiblement rectilignes parallèles croise sous un angle une seconde pluralité des creux sensiblement rectilignes parallèles, en particulier l'angle étant entre 70 degrés et 110 degrés, et/ou qu'une pluralité des creux, en particulier plus de la moitié des creux, de préférence sensiblement tous les creux, a/ont une forme de lignes brisées ouvertes ou fermées sur la face radiale d'appui.

11. Douille selon l'une des revendications précédentes, **caractérisée en ce qu'**une pluralité des creux, en particulier plus de la moitié des creux, de préférence sensiblement tous les creux, a/ont une forme serpentine sur la face radiale d'appui et/ou qu'une pluralité des creux, en particulier plus de la moitié des creux, de préférence sensiblement tous les creux, représentent un marquage ou une écriture sur la face radiale d'appui.

12. Douille selon l'une des revendications précédentes, **caractérisée en ce que** ladite extrémité étant déformée par un procédé de bouterollage, en particulier ladite extrémité ayant un bourrelet.

13. Articulation élastique (1) pour assembler deux pièces de structure d'un véhicule et pour amortir des vibrations transmises entre l'une et l'autre pièce de structure ; ladite articulation ayant un axe longitudinal et comportant une douille externe (3), une douille interne (5), et un ensemble de ressort élastique ou hydro-élastique (7) étant disposé entre les deux douilles interne et externe, une des douilles interne ou externe (3, 5) étant formée selon l'une des revendications précédentes.

14. Articulation selon la revendication 13, **caractérisée en ce que** les douilles internes et externe sont sensiblement concentriques dans l'état détendu de l'articulation et/ou qu'une des deux pièces de structure d'un véhicule est susceptible d'être serré, par exemple par un vissage ou un rivetage, contre la face d'appui.

15. Procédé de traitement d'une douille (5) pour une articulation (1) destinée à assembler deux pièces de structure d'un véhicule, la douille ayant à au moins une de leurs deux extrémités axiales (11) une face radiale d'appui (15) définissant un plan de référence radial (17), dans ledit procédé:
- ladite extrémité est déformée par un bouterollage; **caractérisé en ce que**
- la face radiale d'appui de l'extrémité déformée est traitée par un faisceau laser afin de former des creux (19) avec une profondeur axiale maximale inférieure à 1 mm, en particulier inférieure à 0.5 mm, et des élévations (21) avec une hauteur axiale maximale inférieure à 1 mm, en particulier inférieure à 0.5 mm, respectivement par rapport au plan de référence radial.

16. Procédé selon la revendication 15, **caractérisé en ce que** les creux sont formés avec une profondeur axiale maximale supérieure à 0.1 et/ou les élévations sont formées avec une hauteur axiale maximale supérieure à 0.1 respectivement par rapport au plan de référence radial et/ou les élévations sont disposées de chaque côté des creux, et en particulier formées par la matière déformé lors de la formation des creux par le faisceau laser.

17. Procédé selon revendication 15 ou 16 pour former une douille selon l'une des revendications 1 à 12.

## Patentansprüche

1. Hülse (5) für ein elastisches Gelenk (1), das dazu bestimmt ist, elastisch zwei Strukturteile eines Fahrzeugs zusammenzufügen, wobei die Hülse an mindestens einem ihrer zwei axialen Enden (11) eine radiale Auflagefläche (15) aufweist, die eine radiale Bezugsebene (17) definiert, und ein Mittel zum Erhöhen der Reibung (19, 21) zwischen der Auflagefläche und einem ihrer zwei Strukturteile, wobei das Mittel zum Erhöhen der Reibung durch mehrere Vertiefungen (19) und Erhöhungen (21) an der radialen Auflagefläche gebildet ist, wobei die Vertiefungen (19) und die Erhöhungen (21) durch einen Laserstrahl gebildet sind, wobei die Vertiefungen eine maximale axiale Tiefe aufweisen, die kleiner ist als 1 mm, insbesondere kleiner als 0,5 mm, und die Erhöhungen (21) eine maximale axiale Höhe kleiner als 1 mm, insbesondere kleiner als 0,5 mm, jeweils bezüglich der radialen Bezugsebene aufweisen, wobei eine Erhöhung zwischen einer Vertiefung und einem nicht verformten Teil der radialen Auflagefläche angeordnet ist, wobei der nicht verformte Teil in der radialen Bezugsebene liegt, und dass die Erhöhungen und die Vertiefungen aneinander grenzen, und dass zwei Erhöhungen mit jeder Vertiefung assoziiert sind, und dass die Erhöhungen durch Material gebildet sind, das während des Bildens der Vertiefungen mit dem Laserstrahl verformt wird, **dadurch gekennzeichnet, dass** die Erhöhungen und die Vertiefungen Höhen- oder Tiefenwerte aufweisen, die bezüglich der radialen Bezugsebene im Wesentlichen gleich sind.

2. Hülse nach Anspruch 1, **dadurch gekennzeichnet, dass** die Vertiefungen eine maximale axiale Tiefe zwischen 0,1 und 0,5 mm aufweisen und/oder die Erhöhungen eine maximale axiale Höhe zwischen 0,1 und 0,5 mm jeweils bezüglich der radialen Bezugsebene aufweisen.

3. Hülse nach Anspruch 1 oder 2, **dadurch gekennzeichnet, dass** eine Mehrzahl der Vertiefungen, insbesondere im Wesentlichen alle Vertiefungen länglich ist/sind, insbesondere in Form einer Furche, und sich mit einer im Wesentlichen konstanten axialen Tiefe in der radialen Auflagefläche erstreckt (erstrecken).

4. Hülse nach einem der vorstehenden Ansprüche, **dadurch gekennzeichnet, dass** die Vertiefungen eine Breite von etwa 0,1 mm bis 0,5 mm in der radialen Bezugsebene aufweisen.

5. Hülse nach einem der vorstehenden Ansprüche, **dadurch gekennzeichnet, dass** die Erhöhungen parallel zu den Vertiefungen angeordnet sind.

6. Hülse nach einem der vorstehenden Ansprüche, **dadurch gekennzeichnet, dass** die Oberfläche einen Reibungskoeffizienten größer als etwa 0,3 und insbesondere kleiner als etwa 0,95 aufweist.

7. Hülse nach einem der vorstehenden Ansprüche, **dadurch gekennzeichnet, dass** das Verhältnis zwischen der Oberfläche der radialen Auflagefläche, die durch den Laserstrahl verformt ist, und der nicht durch den Laserstrahl verformten Oberfläche der radialen Auflagefläche jeweils in der radialen Bezugsebene größer ist als 1/3, insbesondere zwischen 1/3 und 1, bevorzugt um 1/2, und/oder dass sich eine Mehrzahl der Vertiefungen, insbesondere mehr als die Hälfte der Vertiefungen, bevorzugt alle Vertiefungen in eine radiale Richtung erstreckt/erstrecken, insbesondere in Form eines Sterns, der seine Mitte an der Längsachse der Hülse hat.

8. Hülse nach einem der vorstehenden Ansprüche, **dadurch gekennzeichnet, dass** sich mindestens eine Vertiefung im Wesentlichen spiralförmig erstreckt, indem sie insbesondere ihre Mitte an der Längsachse der Hülse hat.

9. Hülse nach einem der vorstehenden Ansprüche, **dadurch gekennzeichnet, dass** eine Mehrzahl der Vertiefungen, insbesondere mehr als die Hälfte der Vertiefungen, bevorzugt im Wesentlichen alle Vertiefungen im Wesentlichen kreisförmig ist/sind, wobei jede im Wesentlichen kreisförmige Vertiefung insbesondere einen unterschiedlichen Durchmesser aufweist, jedoch insbesondere eine Mehrzahl der im Wesentlichen kreisförmigen Vertiefungen, insbesondere mehr als die Hälfte der im Wesentlichen kreisförmigen Vertiefungen, bevorzugt im Wesentlichen alle kreisförmigen Vertiefungen konzentrisch ist/sind, insbesondere um eine Längsachse der Hülse, oder eine Mehrzahl der im Wesentlichen kreisförmigen Vertiefungen, insbesondere mehr als die Hälfte der im Wesentlichen kreisförmigen Vertiefungen, bevorzugt im Wesentlichen alle im Wesentlichen kreisförmigen Vertiefungen jeweils eine unterschiedliche Mitte aufweist/aufweisen.

10. Hülse nach einem der vorstehenden Ansprüche, **dadurch gekennzeichnet, dass** eine Mehrzahl der Vertiefungen, insbesondere mehr als die Hälfte der Vertiefungen, bevorzugt im Wesentlichen alle Vertiefungen im Wesentlichen geradlinig ist/sind, insbesondere eine erste Mehrzahl der im Wesentlichen geradlinigen parallelen Vertiefungen unter einem Winkel eine zweite Mehrzahl der im Wesentlichen parallelen geradlinigen Vertiefungen kreuzt, wobei der Winkel insbesondere zwischen 70 Grad und 110 Grad beträgt, und/oder dass eine Mehrzahl der Vertiefungen, insbesondere mehr als die Hälfte der Vertiefungen, bevorzugt alle Vertiefungen eine Form offener oder geschlossener durchbrochener Linien auf der radialen Auflagefläche aufweist/aufweisen.

11. Hülse nach einem der vorstehenden Ansprüche, **dadurch gekennzeichnet, dass** eine Mehrzahl der Vertiefungen, insbesondere mehr als die Hälfte der Vertiefungen, bevorzugt im Wesentlichen alle Vertiefungen eine Serpentinenform auf der radialen Auflagefläche aufweist/aufweisen, und/oder dass eine Mehrzahl der Vertiefungen, insbesondere mehr als die Hälfte der Vertiefungen, bevorzugt im Wesentlichen alle Vertiefungen eine Kennzeichnung oder eine Schrift auf der radialen Auflagefläche darstellen.

12. Hülse nach einem der vorstehenden Ansprüche, **dadurch gekennzeichnet, dass** das Ende durch ein Aufweitverfahren verformt wird, wobei das Ende insbesondere einen Wulst aufweist.

13. Elastisches Gelenk (1) zum Zusammenfügen von zwei Strukturteilen eines Fahrzeugs und zum Dämpfen der Schwingungen, die zwischen dem einem und dem anderen Strukturteil übertragen werden; wobei das Gelenk eine Längsachse aufweist und eine externe Hülse (3), eine interne Hülse (5) umfasst, und wobei eine elastische oder hydro-elastische Federeinheit (7) zwischen den zwei Hülsen, nämlich der internen und der externen angeordnet ist, wobei eine der internen oder externen Hülsen (3, 5) gemäß einem der vorstehenden Ansprüche gebildet ist.

14. Gelenk nach Anspruch 13, **dadurch gekennzeichnet, dass** die interne und externe Hülse im Wesentlichen in dem entspannten Zustand des Gelenks konzentrisch sind, und/oder dass eines der zwei Strukturteile eines Fahrzeugs zum Beispiel durch ein Schrauben oder Nieten gegen die Auflagefläche gespannt werden kann.

15. Verarbeitungsverfahren einer Hülse (5) für ein Gelenk (1), das zum Zusammenfügen von zwei Strukturteilen eines Fahrzeugs bestimmt ist, wobei die Hülse an mindestens einem ihrer zwei axialen Enden (11) eine radiale Auflagefläche (15) aufweist, die eine radiale Bezugsebene (17) definiert, wobei bei dem Verfahren:
- das Ende durch ein Aufweiten verformt wird; **dadurch gekennzeichnet, dass**
- die radiale Auflagefläche des verformten Endes durch einen Laserstrahl behandelt wird, um Vertiefungen (19) mit einer maximalen axialen Tiefe kleiner als 1 mm, insbesondere kleiner als 0,5 mm und Erhöhungen (21) mit einer maximalen axialen Höhe kleiner als 1 mm, insbesondere kleiner als 0,5 mm jeweils bezüglich der radialen Bezugsebene zu bilden.

16. Verfahren nach Anspruch 15, **dadurch gekennzeichnet, dass** die Vertiefungen mit einer maximalen axialen Tiefe größer als 0,1 gebildet werden, und/oder die Erhöhungen mit einer maximalen axialen Höhe größer 0,1 jeweils bezüglich der radialen Bezugsebene gebildet werden, und/oder die Erhöhungen auf jeder Seite der Vertiefungen angeordnet sind, und insbesondere durch das Material, das bei dem Bilden der Vertiefungen durch den Laserstrahl verformt wird, gebildet werden.

17. Verfahren nach Anspruch 15 oder 16, um eine Hülse nach einem der Ansprüche 1 bis 12 zu bilden.

## Claims

1. A bush (5) for a resilient joint (1), intended for resiliently assembling two structural parts of a vehicle, the bush having on at least one of its two axial ends (11) a radial support face (15) defining a radial reference plane (17) and a means for increasing the friction (19, 21) between the support face and one of the two structural parts, the means for increasing the friction being formed by a plurality of recesses (19) and elevations (21) on the radial support face, in which the recesses (19) and the elevations (21) are formed by a laser beam, the recesses having a maximum axial depth of less than 1 mm, in particular less than 0.5 mm, and the elevations (21) having a maximum axial height of less than 1 mm, in particular less than 0.5 mm, respectively relative to the radial reference plane, in which an elevation is disposed between a recess and a non-deformed portion of the radial support face, the non-deformed portion being situated in the radial reference plane, and the elevations and the recesses being contiguous and that two elevations are associated with each recess and that the elevations are formed by the deformed material during the formation of the recesses with the laser beam, **characterized in that** the elevations and the recesses have substantially equal height or depth values relative to the radial reference plane.

2. The bush according to Claim 1, **characterized in that** the recesses have a maximum axial depth of between 0.1 and 0.5 mm and/or the elevations have a maximum axial height of between 0.1 and 0.5 mm respectively relative to the radial reference plane.

3. The bush according to Claim 1 or 2, **characterized in that** a plurality of the recesses, in particular substantially all the recesses, is/are elongate, in particular in the form of a groove, and extend(s) with a substantially constant axial depth in the radial support face.

4. The bush according to one of the preceding claims, **characterized in that** the recesses have a width of approximately 0.1 mm to 0.5 mm in the radial reference plane.

5. The bush according to one of the preceding claims, **characterized in that** the elevations are disposed parallel to the recesses.

6. The bush according to one of the preceding claims, **characterized in that** the surface has a friction coefficient greater than approximately 0.3 and, in particular less than approximately 0.95.

7. The bush according to one of the preceding claims, **characterized in that** the ratio between the surface of the radial support face deformed by the laser beam and the surface of the radial support face not deformed by the laser beam respectively in the radial reference plane is greater than 1/3, in particular between 1/3 and 1, preferably about 1/2, and/or that a plurality of the recesses, in particular more than half of the recesses, preferably all the recesses, extend(s) in a radial direction, in particular in a star shape having its centre at the longitudinal axis of the bush.

8. The bush according to one of the preceding claims, **characterized in that** at least one recess extends substantially spiroidally, in particular having its centre at the longitudinal axis of the bush.

9. The bush according to one of the preceding claims, **characterized in that** a plurality of the recesses, in particular more than half of the recesses, preferably substantially all the recesses, is/are substantially circular, each substantially circular recess having in particular a different diameter, however particularly a plurality of the substantially circular recesses, in particular more than half of the substantially circular recesses, preferably substantially all the substantially circular recesses, is/are concentric, in particular about a longitudinal axis of the bush, or a plurality of the substantially circular recesses, in particular more than half of the substantially circular recesses, preferably substantially all the substantially circular recesses, has/have respectively a different centre.

10. The bush according to one of the preceding claims, **characterized in that** a plurality of the recesses, in particular more than half of the recesses, preferably substantially all the recesses, is/are substantially rectilinear, in particular a first plurality of the parallel substantially rectilinear recesses crosses under an angle a second plurality of the parallel substantially rectilinear recesses, in particular the angle being between 70 degrees and 110 degrees, and/or that a plurality of the recesses, in particular more than half of the recesses, preferably substantially all the recesses, has/have a shape of open or closed broken lines on the radial support face.

11. The bush according to one of the preceding claims, **characterized in that** a plurality of the recesses, in particular more than half of the recesses, preferably substantially all the recesses, has/have a serpentine shape on the radial support face and/or that a plurality of the recesses, in particular more than half of the recesses, preferably substantially all the recesses, represent a marking or a writing on the radial support face.

12. The bush according to one of the preceding claims, **characterized in that** said end being deformed by a heading process, in particular said end having a bead.

13. A resilient joint (1) for assembling two structural parts of a vehicle and for damping vibrations transmitted between one and the other structural part; said joint having a longitudinal axis and comprising an external bush (3), an internal bush (5), and an elastic or hydro-elastic spring assembly (7) being disposed between the two internal and external bushes, one of the internal or external bushes (3, 5) being formed according to one of the preceding claims,

14. The joint according to Claim 13, **characterized in that** the internal and external bushes are substantially concentric in the relaxed state of the joint and/or that one of the two structural parts of a vehicle is capable of being tightened, for example by a screwing or a riveting, against the support face.

15. A method for processing a bush (5) for a joint (1) intended for assembling two structural parts of a vehicle, the bush having at at least one of their two axial ends (11) a radial support face (15) defining a radial reference plane (17), in said method:
- said end is deformed by a heading; **characterized in that**
- the radial support face of the deformed end is processed by a laser beam so as to form recesses (19) with a maximum axial depth of less than 1 mm, in particular less than 0.5 mm, and elevations (21) with a maximum axial height of less than 1 mm, in particular less than 0.5 mm, respectively relative to the radial reference plane.

16. The method according to Claim 15, **characterized in that** the recesses are formed with a maximum axial depth greater than 0.1 and/or the elevations are formed with a maximum axial height greater than 0.1 respectively relative to the radial reference plane and/or the elevations are disposed on each side of the recesses, and in particular formed by the deformed material during the formation of the recesses by the laser beam.

17. The method according to Claim 15 or 16 for forming a bush according to one of Claims 1 to 12.
